# EUROPÄISCHE PATENTSCHRIFT

(11) **EP 1 690 718 B1**
(45) Veröffentlichungstag und Bekanntmachung des Hinweises auf die Patenterteilung: **24.12.2008**
(21) Anmeldenummer: 06002954.3
(22) Anmeldetag: 14.02.2006
(51) Int. Cl.: B60J 7/20

(54) **Abdeckanordnung für einen Verdeckkasten zur Aufnahme eines verstellbaren Fahrzeugverdecks**
Cover arrangement for a storage compartment for a retractable vehicle roof
Couverture pour coffre arrière pour ranger un toit escamotable de véhicule

(30) Priorität: 14.02.2005 DE 102005006508
(43) Veröffentlichungstag der Anmeldung: 16.08.2006
(73) Patentinhaber: Wilhelm Karmann GmbH, 49084 Osnabrück (DE)
(72) Erfinder: Franzen, Hans-Joachim, 49143 Bissendorf (DE); Van Berkum, Wim, 49179 Ostercappeln (DE); Eymann, Ralf, 49170 Hagen a.T.W. (DE); Focken, Enno, 49074 Osnabrück (DE); Knöthig, Holger, 49076 Osnabrück (DE); Ballweg, Felix, 20537 Hamburg (DE); Faul, Robert, 22047 Hamburg (DE)

(56) Entgegenhaltungen:
- DE-A1- 4 426 733
- DE-A1- 10 131 892
- DE-A1- 19 523 929
- DE-U1-0202004 003 88

## Beschreibung

Die Erfindung betrifft eine Abdeckanordnung für einen Verdeckkasten zur Aufnahme eines verstellbaren Fahrzeugverdecks wie es bei Cabriolet-Fahrzeugen zum Einsatz kommt. Solche Abdeckungen sind an sich bekannt und häufig in Form von starren aber verschwenkbaren Klappen oder beweglichen Platten ausgeführt.

Außerdem sind Vorrichtungen bekannt, deren Abdeckanordnung einen Luftsack (Airbag) umfasst. In der DE 44 26 733 A1 ist ein Überrollbügel beschrieben, dessen Hauptbestandteil ein Airbag ist, der sich zusammengefaltet z.B. in einer Vertiefung im Deckel eines Verdeckkastens befindet. Der Airbag wird nur im Überschlagsfall aktiviert und wirkt dann als Überrollbügel, der durch seitlich des Airbags angeordnete Klappen verstärkt wird. Aus der DE 195 23 929 A1 ist ein Überrollschutzsystem bekannt, bei dem mindestens zwei Trägerflächen zu einem dreidimensionalen Tragwerk aufstellbar sind und mindestens ein Luftsackgebilde bei aktivierter Schutzstellung, also im befüllten Zustand, dieses Tragwerk von innen stützt. Die Trägerflächen sind dabei bevorzugt Karosserieteile, z.B. ein zweischalig ausgeführter Verdeckkastendeckel, wobei es möglich ist, dass das Luftsackgebilde in Ruheposition zusammengefaltet zwischen den beiden Trägerflächen abgelegt werden kann.

Im Folgenden wird die Abdeckanordnung auch als Verdeckkastenabdeckung oder als variable Hutablage, ggf. auch nur kurz als Hutablage, bezeichnet.

Die Abdeckanordnung ist zur Abdeckung des Verdeckkastens vorzugsweise zum Fahrzeuginnenraum hin vorgesehen. Der Verdeckkasten erstreckt sich hinter dem Fahrzeuginnenraum und ist von diesem durch eine Rück- oder Trennwand getrennt. Hinter dem Fahrzeuginnenraum, also hinter der Fahrgastzelle, wird der Verdeckkasten durch einen dafür vorgesehenen Verdeck- oder Heckkastendeckel abgedeckt. Die Abdeckanordnung trennt damit den Fahrzeuginnenraum vom Verdeckkasten.

Der Erfindung besteht darin, ein neuartiges Konzept für eine solche Abdeckanordnung anzugeben.

Diese Aufgabe wird erfindungsgemäß mit den Merkmalen des Anspruchs 1 gelöst. Dazu ist eine Abdeckanordnung der eingangs genannten Art vorgesehen, die mindestens einen mit einem evakuierbaren Medium befüllbaren, elastischen Behälter umfasst und bei der der Behälter beim Ablegen und/oder Schließen des Verdecks evakuiert und bei geschlossenem und/oder abgelegten Verdeck befüllt ist. Die Verwendung eines befüllbaren Behälters in der Abdeckanordnung, insbesondere als variable Hutablage, hat den Vorteil, dass zum Bewegen der Abdeckanordnung der bisherige mechanische Aufwand, der sich beim Klappen, Schwenken oder sonstigen Bewegen bisheriger Abdeckanordnungen oder Hutablagen ergeben hat, erheblich reduziert ist. Beim Ablegen und/oder Schließen des Verdecks ist nämlich der Behälter evakuiert, so dass der Verdeckkasten geöffnet ist. Bei geschlossenem und/oder abgelegtem, d.h. offenem Verdeck ist der Behälter befüllt, so dass der Verdeckkasten geschlossen ist. Zum Evakuieren und/oder Befüllen des Behälters ist ein Druckaggregat, z.B. in Form einer Druckpumpe, vorgesehen, wobei beim Evakuieren oder Befüllen des Behälters das Druckaggregat arbeitet und je nach Strömungsrichtung des verwendeten Mediums der Behälter an Volumen zu- oder abnimmt. Mechanische Teile sind also für eine solche Bewegung des Behälters und der dadurch gebildeten Abdeckanordnung nicht erforderlich. Bevorzugt ist das Medium dabei Luft, insbesondere Druckluft, und der Behälter dann entsprechend ein Luftsack.

Die Erfindung hat zudem den Vorteil, dass der Behälter hinsichtlich seiner Form in befülltem Zustand optimal an die jeweiligen Form- und Raumerfordernisse im Fahrzeug angepasst werden kann. So ist gemäß einer bevorzugten Ausführungsform z.B. vorgesehen, dass der Behälter in befülltem Zustand eine Nut zu Aufnahme einer Vorderkante des Verdecks ausbildet. Wenn die Verdeckvorderkante in diese Nut eingreift, ist beim abgelegten Verdeck ein besonderer, bündiger Anschluss zwischen dem Verdeck einerseits und der Abdeckanordnung andererseits, nämlich dem als variable Hutablage fungierenden Behälter, gewährleistet. Zum Eingriff der Verdeckvorderkante in diese Nut ist bevorzugt vorgesehen, dass der Behälter beim Befüllen derart an Volumen zunimmt, dass sich ein Teil des Behälters oberhalb der Verdeckvorderkante erstreckt und sich ein weiteres Teil unterhalb der Verdeckvorderkante erstreckt. Beim weiteren Befüllen des Behälters wird die Verdeckvorderkante dann gewissermaßen von den oberhalb und unterhalb der Verdeckvorderkante befindlichen Teilen des Behälters eingefasst.

Weiter bevorzugt ist vorgesehen, dass der Behälter in zumindest zwei Kammern unterteilt ist, wobei eine der Kammern als außen umlaufender Abschlussschlauch ausgeführt ist, der als Dichtung zwischen der Abdeckanordnung und angrenzenden Teilen der Fahrzeugkarosserie fungiert.

Der Vorteil dieser Ausführungsform besteht neben der Dichtwirkung des Abschlussschlauchs auch darin, dass die beiden unterschiedlichen Kammern, also der Abschlussschlauch und mindestens eine weitere Kammer, unabhängig voneinander befüllbar sind. Hinsichtlich Abschlussschlauch und der mindestens einen weiteren Kammer ist bevorzugt vorgesehen, dass beim Befüllen des Behälters zunächst die mindestens eine weitere Kammer befüllt wird, um den Behälter insgesamt und den am äußeren Ende der Hauptkammer noch schlaffen Abschlussschlauch in eine gewünschte Grundposition zum Abdecken des Verdeckkastens zu bringen und dass der Abdeckschlauch selbst erst befüllt wird, wenn die mindestens eine weitere Kammer bereits befüllt oder zumindest im Wesentlichen befüllt ist. Bevorzugt wird dabei zunächst die mindestens eine weitere Kammer zumindest teilweise befüllt, so dass, wenn die mindestens eine weitere Kammer an Volumen zunimmt, diese als Formelement wirkt und evtl. weitere, bisher nicht oder nur teilweise befüllte Kammern sowie den nicht oder nur teilweise befüllten Abschlussschlauch aus einer Ablageposition abzieht. Damit wird z.B. verhindert, dass der Behälter insgesamt beim Befüllen an im Bereich des Verdeckkastens befindlichen Fahrzeugteilen, z.B. dem abgelegten Verdeck, eingeklemmt wird und deshalb nicht die vorgesehene Position erreichen kann.

Hinsichtlich der Aufteilung des Behälters in mindestens zwei Kammern, nämlich Abschlussschlauch und zumindest eine weitere Kammer, wobei die weitere Kammer oder eine Gesamtheit mehrerer weiterer Kammern im Folgenden auch als Hauptkammer bezeichnet wird, ist vorgesehen, dass das Volumen des Abschlussschlauchs mit dem Volumen der Hauptkammer, über zumindest ein Ventil gekoppelt ist, derart, dass bei Erreichen eines Schwelldrucks in der Hauptkammer das oder jedes Ventil zum Abschlussschlauch hin öffnet. Auf diese Art und Weise ist gewährleistet, dass beim Befüllen des Behälters zunächst die Hauptkammer an Volumen zunimmt und dass das Befüllen des Abschlussschlauchs erst beginnt, wenn die Hauptkammer bereits vollständig oder zumindest im Wesentlichen befüllt ist. Weiter bevorzugt sind die Ventile, die das Volumen des Abschlussschlauchs an das Volumen der Hauptkammer koppeln, derart ausgeführt, dass bei einem Druckabfall in der Hauptkammer ausgehend von einem Druck im Bereich des Schwelldrucks das oder jedes Ventil zur Hauptkammer hin öffnet. Auf diese Art und Weise ist ein Evakuieren der beiden Kammern des Behälters möglich, ohne dass - genau wie beim Befüllen - eine separate Anbindung jeder Kammer an die Druckquelle erforderlich wäre.

Besonders bevorzugt ist vorgesehen, dass der Behälter seitlich von der Hauptkammer jeweils eine weitere Kammer umfasst, die als Seitenklappe fungiert. Solche Seitenklappen sind auch bei bisherigen Hutablagen bekannt und ermöglichen die Bewegung der Verdeckkinematik beim Schließen des Verdecks. In das erfindungsgemäße Konzept zur Verwendung eines befüllbaren Behälters als variable Hutablage lassen sich bewegliche Seitenklappen besonders gut integrieren, weil auch solche Seitenklappen als zusätzliche Kammern innerhalb des Behälters ausgeführt werden können. Zum Befüllen und Evakuieren der als Seitenklappen fungierenden zusätzlichen Kammern des Behälters ist ein Konzept mit Ventilen sinnvoll und vorgesehen, die das Volumen der Hauptkammern an das Volumen der Seitenkammern koppeln. Zum Befüllen und Evakuieren der Seitenkammern können für die jeweiligen Ventile wieder Schwelldrucke geeignet vorgegeben werden, so dass beim Befüllen des Behälters insgesamt ein koordiniertes Befüllen zunächst der Hauptkammer und erst später der Seitenkammern erfolgt.

Schließlich ist gemäß einer bevorzugten Ausführungsform vorgesehen, dass die Hauptkammer selbst in zumindest zwei im Wesentlichen parallel zum Abschlussschlauch ausgerichtete Kammern unterteilt ist, wobei beim Befüllen des Behälters die an den Anschlussschlauch angrenzende Kammer der Hauptkammer zuerst befüllt wird.

Gemäß einer bevorzugten Ausführungsform ist vorgesehen, dass der Behälter zumindest eine insbesondere innere Nebenkammer umfasst, die bei evakuiertem Behälter befüllbar ist und in befülltem Zustand als Formelement fungiert. Mit einer solchen Nebenkammer ist es nämlich möglich, den in evakuiertem Zustand ansonsten im Wesentlichen schlaff herunterhängenden Behälter mit der befüllten Nebenkammer in eine Vorzugsposition, insbesondere eine aufgerichtete Position, zu bringen, in der gewährleistet ist, dass der evakuierte Behälter sich weder im Bewegungsraum des Verdecks befindet noch dass beim erneuten Befüllen des Behälters dieser sich an anderen Fahrzeugkomponenten, z.B. dem abgelegten Verdeck, verklemmt.

In einer weiteren bevorzugten Ausführungsform ist schließlich vorgesehen, dass dem Behälter eine einziehbare Hülle zugeordnet ist, die den Behälter zumindest einseitig entlang der Fahrzeuglängsrichtung umschließt. Diese einziehbare Hülle erfüllt grundsätzlich die gleiche Aufgabe wie die bereits beschriebene Nebenkammer und stellt insofern eine alternative, ggf. zusätzliche Ausführungsform dar, mit der sich gewährleisten läßt, dass sich der evakuierte Behälter weder im Bewegungsraum des Verdecks befindet noch sich beim erneuten Befüllen an Fahrzeugkomponenten verklemmt. Die Hülle kann den Behälter vollständig umschließen, so dass ein festes Ende der Hülle an einer Unterseite der Befestigungsposition des Behälters angebracht ist. Ein bewegliches Ende der Hülle ist entsprechend an der Oberseite der Befestigungsposition des Behälters angebracht (oder umgekehrt) und die Hülle ist an dieser Stelle aufwickelbar. Beim Aufwickeln der Hülle verkürzt sich die Länge des außen liegenden, den Behälter umschließenden Abschnitts der Hülle, so dass der evakuierte Behälter zusammengedrückt wird. Alternativ kann auch vorgesehen sein, dass die Hülle mit ihrem freien Ende in etwa im Bereich einer Hinterkante des Abschlussschlauchs am Behälter befestigt wird, so dass beim Einziehen der Hülle die Hinterkante des Abschlussschlauchs angehoben wird und damit der schlaffe Behälter aus dem Bewegungsbereich des Verdecks sicher entfernt wird.

Bevorzugt ist dazu die einziehbare Hülle auf einer unter Federspannung stehenden Walze geführt, wobei die einziehbare Hülle beim Befüllen des Behälters gegen die Federspannung von der Walze abziehbar ist und wobei die einziehbare Hülle auf die Walze beim Evakuieren des Behälters aufgrund der Federspannung aufwickelbar ist. Auf diese Weise ist gewährleistet, dass das Einziehen und Abziehen der Hülle beim Evakuieren bzw. Befüllen des Behälters in mechanisch besonders einfacher Weise ohne zusätzlichen konstruktiven Aufwand erfolgen kann, weil nämlich die Volumenzunahme beim Befüllen des Behälters ausreicht, um die Hülle gegen die Federspannung von der Walze abzuziehen. Beim Evakuieren des Behälters bewirkt die Federspannung das Einziehen der Hülle, so dass mit abnehmendem Volumen des Behälters stets ein maximal mögliches Einfalten oder Zusammenpressen des bereits teilweise erschlafften Behälters durch die Hülle möglich ist.

Hinsichtlich eines koordinierten Einfaltens oder Zusammenpressens des erschlafften Behälters durch die Hülle ist bevorzugt vorgesehen, dass die Walze in einem Mittelbereich einen maximalen Durchmesser aufweist und dass sich die Walze zu jeder Seite hin verjüngt. Auf diese Art und Weise steht im Mittelbereich der Walze eine größere Länge der Hülle zur Verfügung, was mit der größten Länge des befüllten Behälters entlang der Fahrzeuglängsrichtung korrespondiert. Durch die besondere Formgebung der Walze ist damit gewährleistet, dass der längere Mittelteil des Behälters genauso schnell durch die Hülle eingefaltet oder zusammengepresst wird, wie die im Vergleich dazu kürzeren Seitenteile.

Gemäß einer weiteren bevorzugten zusätzlichen oder alternativen Ausführungsform ist vorgesehen, dass dem Behälter ein längenveränderlicher Rahmen mit zumindest einem quer zur Längsachse der Fahrzeugs ausgerichteten Spriegel zum kontrollierten Zusammenziehen des Behälters während des Evakuierens oder in evakuiertem Zustand zugeordnet ist. Der Rahmen fungiert damit gleichsam als Traggerüst, das gewährleistet, dass der Behälter in erschlafftem oder noch nicht vollständig befülltem Zustand nicht zwischen andere Fahrzeugteile gerät oder sich beim Befüllen an solchen Fahrzeugteilen nicht verklemmt. Eine besonders gute Unterstützung des Behälters ist dabei dann möglich, wenn der Rahmen für jede Kammer des Behälters einen eigenen Spriegel umfasst. Bevorzugt ist dabei jeder Spriegel im Bereich einer Trennwand zwischen jeweils zwei benachbarten Kammern des Behälters mit diesem verbunden.

Hinsichtlich der Beweglichkeit des Rahmens und der darin zusammengefassten Spriegel ist vorgesehen, dass der Rahmen eine seitliche Führung für den oder jeden Spriegel umfasst, in der jeder Spriegel unabhängig beweglich ist. Auf diese Art und Weise ist beim Befüllen des Behälters eine Bewegung der Spriegel mit dem zunehmenden Luftvolumen der jeweiligen Kammern möglich. Beim Evakuieren des Behälters ist eine einzelne Bewegung jedes Spriegels oder eine koordinierte Bewegung sämtlicher Spriegel möglich.

Die Abdeckanordnung mit dem befüllbaren Behälter und dem Rahmen zur Führung des Behälters ist bevorzugt an einer Unterseite eines Verdeck- oder Heckkastendeckels angeordnet. Dabei kann der Behälter im evakuierten Zustand durch den Heckkastendeckel abgedeckt sein. Es wird dabei mit dem üblichen Konzept, wonach die Hutablage an einer Trennwand zwischen Fahrzeuginnenraum und Verdeckkasten bzw. Kofferraum angebracht ist, gebrochen, indem die Abdeckanordnung, also der als variable Hutablage fungierende Behälter, an einer Komponente der rückwärtigen Fahrzeugkarosserie, insbesondere dem Heckkastendeckel, angebracht wird. Dadurch, dass der Behälter in evakuiertem Zustand, insbesondere mitsamt dem Rahmen, durch den Heckkastendeckel abgedeckt ist, ergibt sich zudem der Vorteil, dass eine Beschränkung des Bewegungsraums des Verdecks beim Ein- oder Ausklappen sicher vermieden ist.

Gemäß einer weiteren bevorzugten alternativen Ausführungsform ist vorgesehen, dass der Behälter in eine Mehrzahl parallel zur Fahrzeuglängsrichtung ausgerichteter Kammern aufgeteilt ist, wobei jeweils mindestens eine äußere Kammer als Gestängeklappe fungiert, wobei jeweils eine unmittelbar an die Gestängeklappe angrenzende Kammer als Scharnier und die Gesamtheit der insbesondere zwischen den Scharnieren liegenden Kammern als Hutablage fungiert. Auch auf diese Weise ist eine auf einem evakuierbaren Behälter basierende variable Hutablage realisiert, die zumindest die weiter oben beschriebenen Vorteile und darüber hinaus weitere Vorteile bietet. Die als Scharnier fungierende Kammer entfaltet ihre Funktionalität insbesondere dann, wenn die jeweilige Kammer unabhängig von den Kammern der Hutablage und der oder jeder Kammer der Gestängeklappe befüllbar und/oder evakuierbar ist. Wenn nämlich die Kammer des Scharniers zumindest teilweise evakuiert ist, ergibt sich durch das geringere Volumen im Bereich des Scharniers eine Beweglichkeit der Gestängeklappe relativ zur Hutablage. Zur Bewegung der oder jeder Gestängeklappe ist entsprechend ein zumindest teilweises Evakuieren des Volumens in der als Scharnier fungierenden Kammer vorgesehen. Die Beweglichkeit der oder jeder Gestängeklappe kann durch eine Mechanik mit einer als Drehachse fungierende Achse unterstützt werden, die für jede Gestängeklappe zumindest einen Steuerhebel umfasst, der entlang der Achse verschieblich gelagert ist. Beim Einziehen des Steuerhebels in Richtung einer Mittellängsachse durch das Fahrzeug wird die jeweilige Gestängeklappe in Relation zur Hutablage verschwenkt. Wenn der oder jeder Steuerhebel leicht oberhalb oder unterhalb des Flächenschwerpunkts der Hutablage angeordnet ist, ergibt sich durch diese Position ein zwangsweises Verschwenken der Gestängeklappen in Richtung auf eine Ober- oder Unterseite der Hutablage. Zudem kann vorgesehen sein, dass zum Verschwenken der Gestängeklappen der oder jeder Steuerhebel entlang der Drehachse verschwenkt wird, um die Richtung, in der die Gestängeklappen öffnen, noch besser vorzugeben.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

### Darin zeigen:

- Fig. 1: einen Schnitt durch einen rückwärtigen Teil eines Cabriolet-Fahrzeugs mit unterschiedlichen Bewegungssituationen beim Ablegen eines Verdecks und beim Aufstellen einer variablen Hutablage,
- Fig. 2: ein Detail aus der oberen linken Darstellung in Fig. 1,
- Fig. 3: ein Detail aus der unteren linken Darstellung in Fig. 1,
- Fig. 4: ein Detail aus der unteren rechten Darstellung in Fig. 1,
- Fig. 5: die variable Hutablage aus Fig. 1 in der Draufsicht mit mehreren Kammern, von denen eine als Abschlussschlauch und zumindest eine weitere Kammer als Hauptkammer fungiert,
- Fig. 6 und Fig. 7: einen Rahmen zur Führung der unterschiedlichen Kammern der Hutablage in einer perspektivischen Gesamtansicht,
- Fig. 8, Fig. 9 und Fig. 10: einen Längsschnitt durch einen Abschnitt des Fahrzeugs mit dem Rahmen und der Hutablage,
- Fig. 11: ein Detail des Rahmens,
- Fig. 12, Fig. 13, Fig. 14 und Fig. 15: eine Vorrichtung zum kontrollierten Einfalten der Hutablage im erschlafften Zustand,
- Fig. 16 und Fig. 17: eine Vorrichtung zum Aufrichten der erschlafften Hutablage mittels einer separat befüllbaren Nebenkammer,
- Fig. 18, Fig. 19, Fig. 20 und Fig. 21: eine alternative Ausführungsform der Hutablage mit parallel zur Längsachse des Fahrzeugs ausgerichteten einzelnen Kammern, wobei eine Anzahl seitlicher Kammern als Gestängeklappe fungiert und wobei zur Bewegung der Gestängeklappen eine Mechanik vorgesehen ist.

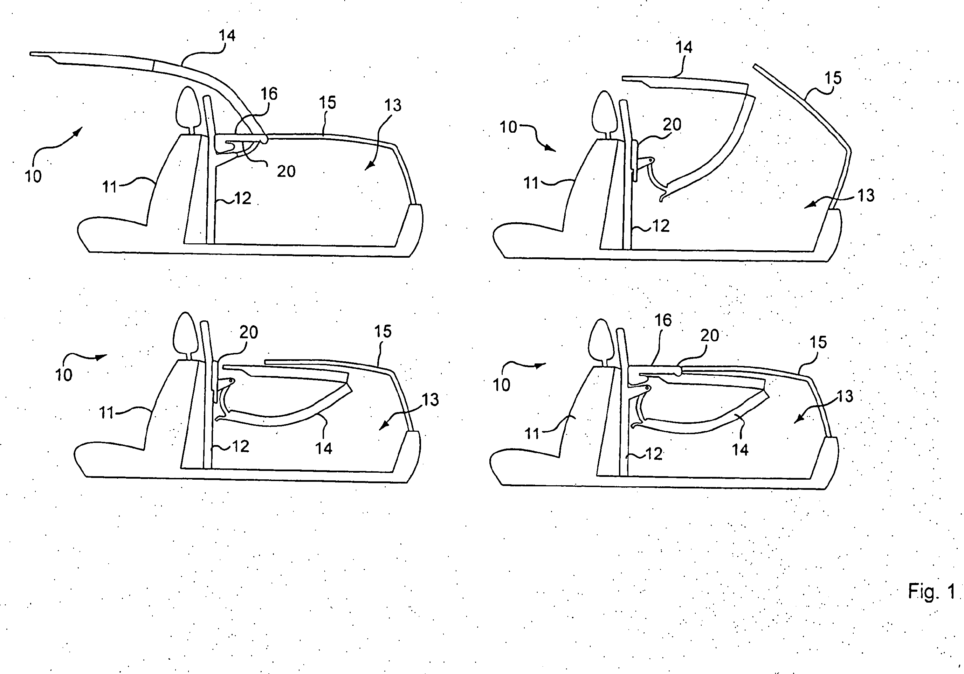

Fig. 1 zeigt in schematisch vereinfachter Form einen Längsschnitt durch den rückwärtigen Teil eines Cabrioletfahrzeugs. Dieses weist in an sich bekannter Form einen Innenraum 10 mit einer Fondsitzbank 11 auf, an die sich im rückwärtigen Teil eine Rück- oder Trennwand 12 anschließt. Die Trennwand 12 trennt den Fahrzeuginnenraum 10 von einem Stauraum 13, der einerseits als Verdeckkasten und zumindest teilweise auch als Kofferraum fungiert. An der Rückwand 12 oder im Bereich der Rückwand 12 ist in an sich bekannter Weise ein bewegliches Verdeck 14 angelenkt.

Das Verdeck 14 ist in der Darstellung links oben in Fig. 1 in geschlossenem Zustand gezeigt. In der Darstellung rechts unten in Fig. 1 ist das Verdeck 14 abgelegt. Die dazwischen liegenden Darstellungen zeigen Momentaufnahmen beim Ablegen des Verdecks 14. Insbesondere ist in der Darstellung oben rechts in Fig. 1 gezeigt, dass zum Ablegen des Verdecks 14 ein Heckkastendeckel 15 zumindest teilweise geöffnet wird, um ausreichend Bewegungsraum für das Verdeck 14.freizugeben. Der Heckkastendeckel 15 wird wieder geschlossen, wenn das Verdeck 14 abgelegt ist.

Ein Zwischenraum zwischen einem hinteren Teil der Trennwand 12 und einer Hinterkante des Verdecks 14 bzw. einer Vorderkante des Heckkastendeckels 15 wird mittels einer als Hutablage 16 fungierenden Abdeckanordnung geschlossen, die erfindungsgemäß mindestens einen mit einem evakuierbaren Medium befüllbaren, elastischen Behälter 20 umfasst. In der Darstellung in Fig. 1 fallen Hutablage 16 und Behälter 20 zusammen, weil der Behälter 20 in befülltem Zustand den wesentlichen Teil der Hutablage 16 bildet. Im evakuierten, erschlafften Zustand ist der Behälter 20 selbstverständlich nicht als Hutablage wirksam. Man erkennt an der Darstellung in Fig. 1, insbesondere der Darstellung rechts oben und links unten, jedoch ausgezeichnet, dass der evakuierte Behälter 20 im erschlafften Zustand nur wenig Raum einnimmt, so dass durch den Behälter 20 der Bewegungsraum des Verdecks 14 beim Einklappen oder beim späteren erneuten Schließen nicht oder nur unwesentlich beschränkt wird.

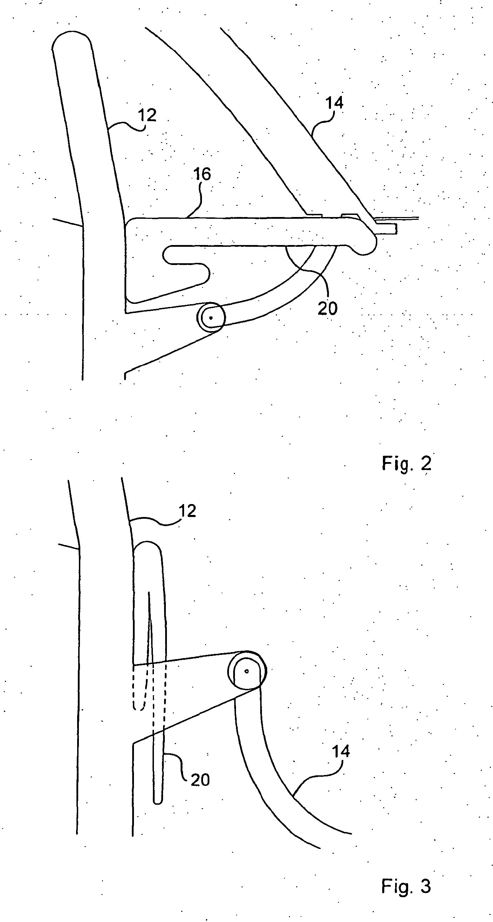

Fig. 2 zeigt in vergrößertem Maßstab ein Detail aus der Darstellung oben links in Fig. 1. Man erkennt den Behälter 20 in befülltem Zustand, der in dieser Form den Zwischenraum zwischen Trennwand 12 und einer Hinterkante des Verdecks 14 vollständig ausfüllt und somit den Fahrzeuginnenraum 10 von der rückwärtig sich anschließenden Fahrzeugkarosserie trennt. Der befüllte Behälter 20 fungiert in dieser Stellung als Hutablage 16 und der als Verdeckkasten dienende Teil des Stauraums 13 ist zum Fahrzeuginnenraum 10 geschlossen.

Fig. 3 zeigt ein Detail aus der Darstellung links unten in Fig. 1. Gezeigt ist eine Situation bei der der Behälter 20 evakuiert ist. Der Behälter 20 hängt also schlaff von seiner Befestigungsposition an der Rückwand 12 herab. Im erschlafften Zustand übernimmt der Behälter 20 selbstverständlich nicht mehr die Funktion einer Hutablage. Bei erschlafftem Behälter 20 ist damit der als Verdeckkasten dienende Teil des Stauraums 13 zum Ablegen des Verdecks 14 geöffnet.

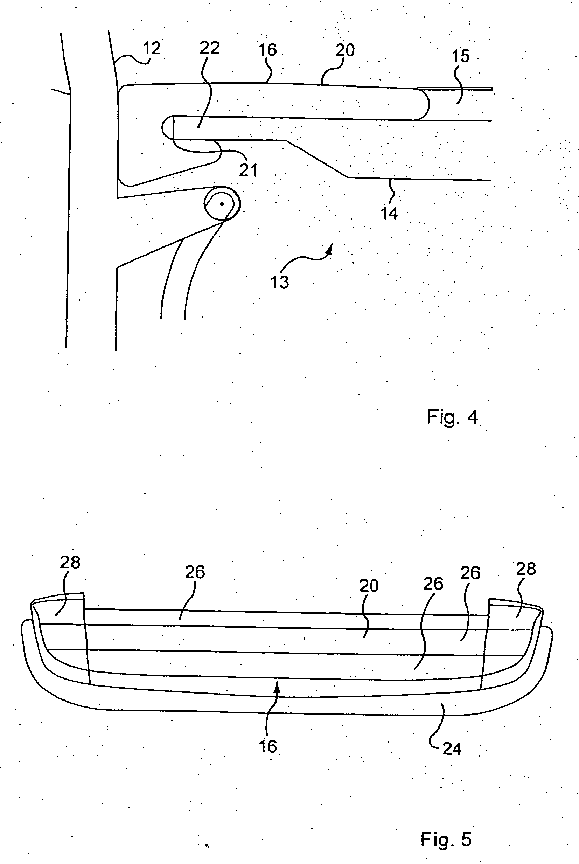

Fig. 4 zeigt ein Detail aus der Darstellung rechts unten in Fig. 1. Man erkennt den vollständig befüllten Behälter 20 in einer Position bei abgelegtem Verdeck. Die Besonderheit besteht darin, dass der Behälter 20 derart geformt ist, dass er eine Nut 21 ausbildet, in die eine Vorderkante des Verdecks, die sogenannte Verdeckspitze, 22, bündig eingreift. Die Verdeckspitze 22 wird also gleichsam von einem oberhalb der Verdeckvorderkante befindlichen Teil des Behälters 20 und einem unterhalb der Verdeckspitze 22 befindlichen Teil des Behälters 20 eingefasst. Dies ermöglicht einem definierten Abschluss des Stauraums 13 bei abgelegtem Verdeck 14. Der Anschluss zwischen Verdeck 14 und dem als Hutablage 16 fungierenden Behälter 20 ist dabei besser als dies bei bisher gebräuchlichen Klappen mit Dichtung möglich wäre, weil kein Spalt zwischen beweglichen und feststehenden Fahrzeugkomponenten bleibt.

Fig. 5 zeigt die Hutablage 16 bzw. den die Hutablage 16 bildenden Behälter 20 in einer Draufsicht. Der Behälter 20 ist in mindestens zwei Kammern 24, 26 unterteilt. Eine der Kammern 24, 26 ist dabei als außen umlaufender Abschlussschlauch 24 ausgeführt. Der Abschlussschlauch 24 fungiert als Dichtung zwischen der Abdeckanordnung, also der Hutablage 16, und angrenzenden Teilen der Fahrzeugkarosserie. Das Volumen des Abschlussschlauchs 24 ist in nicht dargestellter Weise mit dem Volumen der zumindest einen weiteren Kammer 26, wobei die weitere Kammer oder eine Gesamtheit mehrerer weiterer Kammern im Folgenden auch als Hauptkammer 26 bezeichnet wird, über zumindest ein Ventil gekoppelt. Die Kopplung erfolgt dabei derart, dass bei Erreichen eines Schwelldrucks in der Hauptkammer 26 das oder jedes Ventil zum Abschlussschlauch 24 hin öffnet. Umgekehrt öffnet das oder jedes Ventil bei einem Druckabfall in der Hauptkammer 26 ausgehend von einem Druck im Bereich des Schwelldrucks zur Hauptkammer 26. Beim Befüllen des Behälters 20 wird danach zunächst die Hauptkammer 26 oder eine einzelne Kammer 26 der Hauptkammer 26 befüllt. Bei Erreichen des Schwelldrucks in der Hauptkammer 26 öffnet das oder jedes Ventil, das das Volumen der Hauptkammer 26 an das Volumen des Abschlussschlauchs 24 koppelt. Das Befüllen des Abschlussschlauchs 24 beginnt damit erst dann, wenn in der Hauptkammer 26 der Schwelldruck erreicht ist. Damit ist gewährleistet, dass beim Befüllen des Behälters 20 mit dem zuerst erfolgenden Befüllen der Hauptkammer 26 der Behälter 20 einer erste Ausrichtung erfährt, die gewährleistet, dass sich der Behälter beim weiterem Befüllen nicht an anderen Fahrzeugkomponenten, z.B. am abgelegten Verdeck 14, verklemmt. Erst wenn die Hauptkammer 26 bis zum Schwelldruck befüllt ist, wird durch das Öffnen der im Behälter 20 vorgesehen Ventile der Abschlussschlauch 24 befüllt. Der Abschlussschlauch 24 fungiert als Dichtung zu den angrenzenden Teilen der Fahrzeugkarosserie und ist durch die bis zum Schwelldruck befüllte Hauptkammer 26 bereits bis in den Bereich einer Hinterkante des Verdecks 14 oder einer Vorderkante des Heckkastendeckels 15 bewegt, so dass sich beim Befüllen des Abschlussschlauchs 24 ein Anpressen des Abschlussschlauchs 24 an die jeweilige Kontur der Hinterkante des Verdecks 14 oder der Vorderkante des Heckkastendeckels 15 ergibt, die zu der gewünschten Dichtwirkung führt.

Seitlich von der Hauptkammer 26 oder der oder jeder Kammer 26, die in ihrer Gesamtheit die Hauptkammer 26 bilden, sind weitere Kammern 28 vorgesehen, die als Seitenklappen 28 oder Gestängeklappen fungieren. Diese weiteren Kammern 28 sind bevorzugt - ähnlich wie der Abschlussschlauch 24 - an das Volumen der Hauptkammer 26 gekoppelt, so dass beim Befüllen des Behälters 20 zunächst die Hauptkammer 26 und bei Erreichen eines weiteren Schwelldrücks die weiteren Kammern 28 befüllt werden. Auf diese Art und Weise ist ein koordiniertes Befüllen des Behälters 20 möglich, wobei die für die jeweiligen Ventile vorgegebenen Schwelldrucke bestimmen, wann und in welcher Reihenfolge der Abschlussschlauch 24 und die weiteren Kammern 28 befüllt werden.

Wie in Fig. 5 weiter ersichtlich ist, ist die Hauptkammer 26 selbst in zumindest zwei, im Wesentlichen parallel zum Abschlussschlauch 24 ausgerichtete Kammern 26 unterteilt. Dargestellt ist eine Unterteilung der Hauptkammer 26 in drei parallele Kammern 26. Bevorzugt ist beim Befüllen des Behälters 20, nämlich beim Befüllen der Hauptkammer 26, vorgesehen, dass zunächst die unmittelbar an den Abschlussschlauch 24 angrenzende Kammer 26 der Hauptkammer 26 befüllt wird. Bei dieser Vorgehensweise des Befüllens des Behälters 20 ist gewährleistet, dass durch die Volumenzunahme der an den Abschlussschlauch 24 angrenzenden Kammer 26 der Behälter 20 insgesamt aus seiner Ablageposition in definierte Art und Weist austritt. Dabei wird insbesondere der noch schlaffe Abschlussschlauch 24 vor der an Volumen zunehmenden, an der Abschlussschlauch 24 angrenzenden Kammer 26 der Hauptkammer 26 "hergeschoben", so dass gewährleistet ist, dass der noch schlaffe Abschlussschlauch nicht zwischen andere Fahrzeugkomponenten, z.B. in den Spalt zwischen Verdeckspitze 22 und Trennwand 12, gerät und dort das Ausfalten des Behälters 20 behindert. Des Weiteren fungiert die zuerst befüllte Kammer 26 der Hauptkammer 26 hinsichtlich der weiteren Kammern 26 gewissermaßen als "Rahmen", so dass auch die noch schlaffen weiteren Kammern 26 der Hauptkammer 26 mit der Volumenzunahme der zuerst befüllten Kammer 26 aus der Ablageposition des Behälters 20 in definierter Weise abgezogen werden. Das koordinierte Befüllen einer durch mehrere Kammern 26 gebildeten Hauptkammer 26 wird mittels zwischen den einzelnen Kammern 26 befindlicher Ventile der oben bereits beschriebenen Art möglich, die auf einen geeigneten Schwelldruck hin in die jeweils erforderliche Strömungsrichtung öffnen.

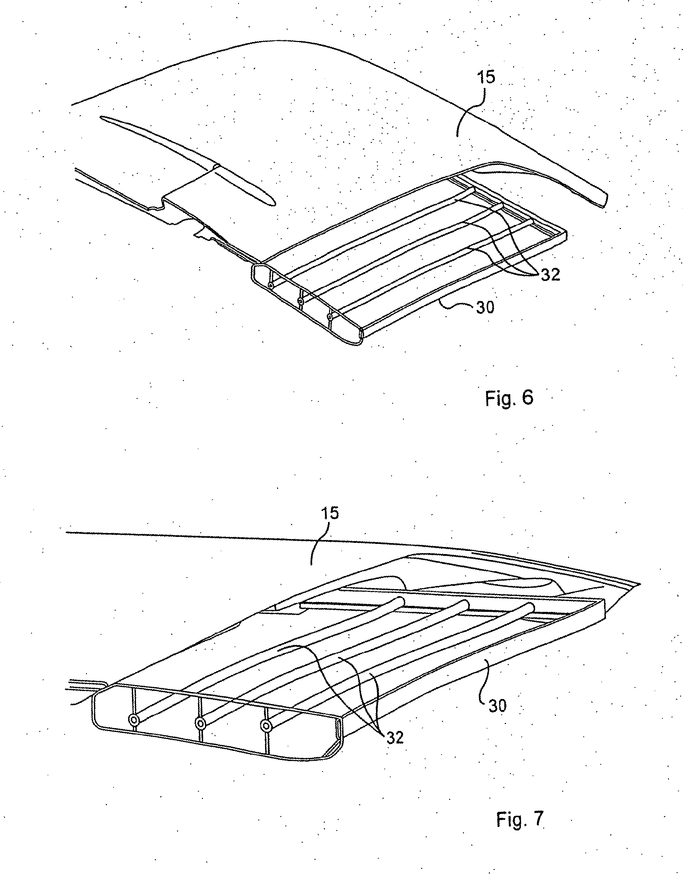

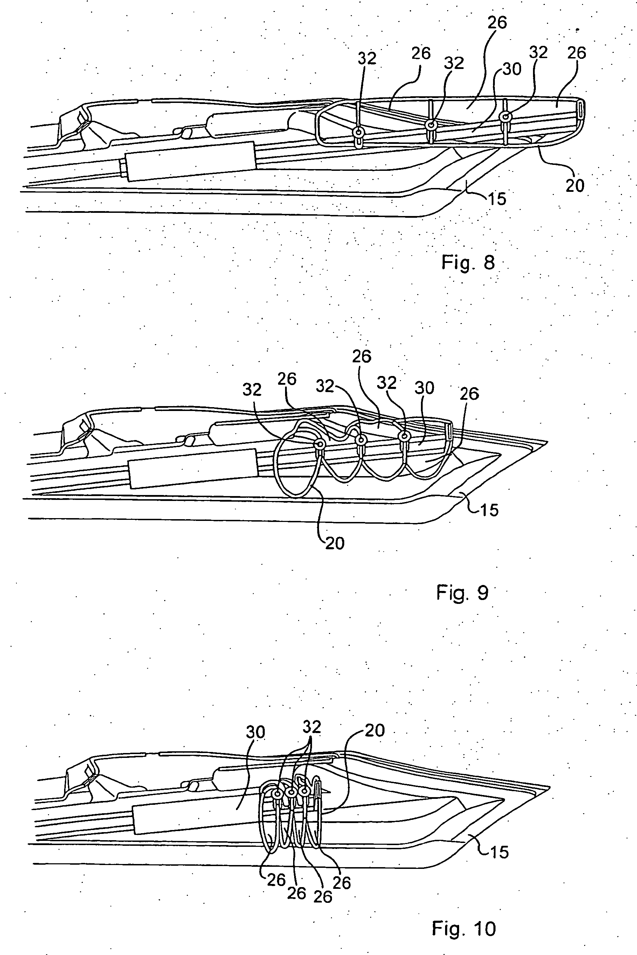

In Fig. 6 und Fig. 7 ist in perspektivischer Ansicht der Heckkastendeckel 15 mit einem darunter angeordneten Rahmen 30 gezeigt, der zur Stützung des Behälters 20 beim Befüllen und beim Evakuieren vorgesehen ist. Der Rahmen 30 ist als längenveränderlicher Rahmen mit zumindest einem quer zu Längsachse des.Fahrzeugs ausgerichteten Spriegel 32 ausgeführt. Der Rahmen 30 dient zum kontrollierten Zusammenziehen des Behälters 20 während des Evakuierens und zum Halten der erschlafften Segmente des Behälters 20 im evakuierten Zustand. In Fig. 8 ist der Rahmen 30 zusammen mit dem Behälter 20 im Längsschnitt gezeigt, wobei der Behälter 20 im befüllten Zustand dargestellt ist. Von dem Behälter 20 erkennt man dabei insbesondere mehrere Kammern 26, wobei jeder Kammer 26 des Behälters 20 genau ein Spriegel 32 derart zugeordnet ist, dass jeder Spriegel 32 im Bereich einer Trennwand zwischen jeweils zwei benachbarten Kammern 26 des Behälters 20 mit diesem verbunden ist. Fig. 9 und Fig. 10 zeigen die gleiche Ansicht wie Fig. 8, wobei in Fig. 9 der Behälter 20 bereits teilweise evakuiert ist und wobei der längenveränderliche Rahmen 30 bereits teilweise eingezogen ist. Man erkennt insbesondere die verkürzte Gesamtlänge des Rahmens 30 und den verringerten Abstand zwischen den einzelnen Spriegeln 32. Des Weiteren ist auch zu erkennen, dass die einzelnen Kammern 26 des Behälters 20 bereits teilweise erschlafft sind. Fig. 10 zeigt schließlich in gleicher Ansicht wie Fig. 8 und Fig. 9 den vollständig oder zumindest im Wesentlichen evakuierten Behälter 20 mit vollständig eingefahrenem Rahmen 30. Die Spriegel 32 sind dabei auf einen minimalen Abstand zusammengerückt. Der Rahmen 30 und die Spriegel 32 halten jedoch den Behälter 20 auch in erschlafftem Zustand direkt unter der Unterseite des Heckkastendeckels 15, so dass gewährleistet ist, dass der erschlaffte Behälter 20 nicht unnötig in den unter dem Heckkastendeckel 15 befindlichen Stauraum 13 herabhängt.

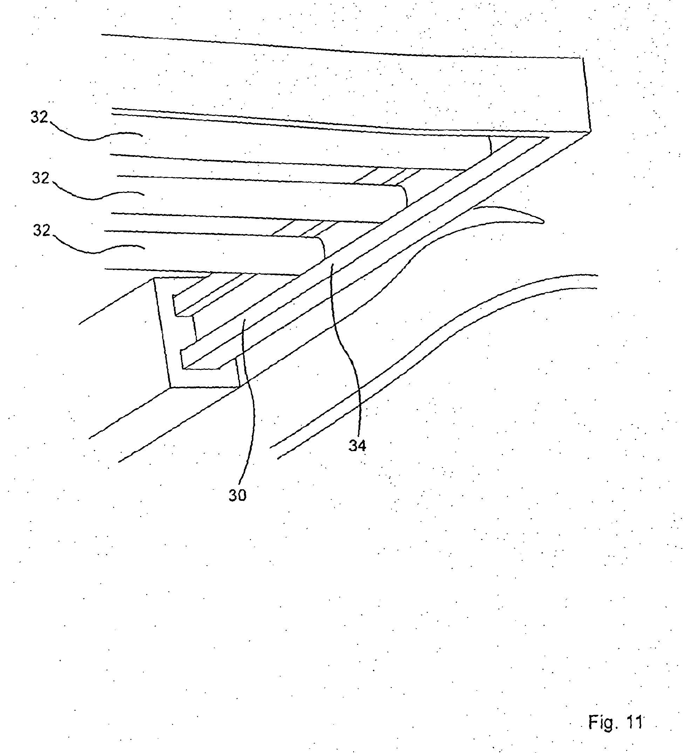

Fig. 11 zeigt schließlich in perspektivischer Darstellung ein Detail des Rahmens 30 mit den darin geführten Spriegeln 32. Man erkennt, dass der Rahmen 30 eine seitliche Führungsschiene 34 umfasst, in der die Spriegel 32 geführt sind, wobei die Führung derart erfolgt, dass in der Führungsschiene 34 jeder Spriegel 32 unabhängig beweglich ist.

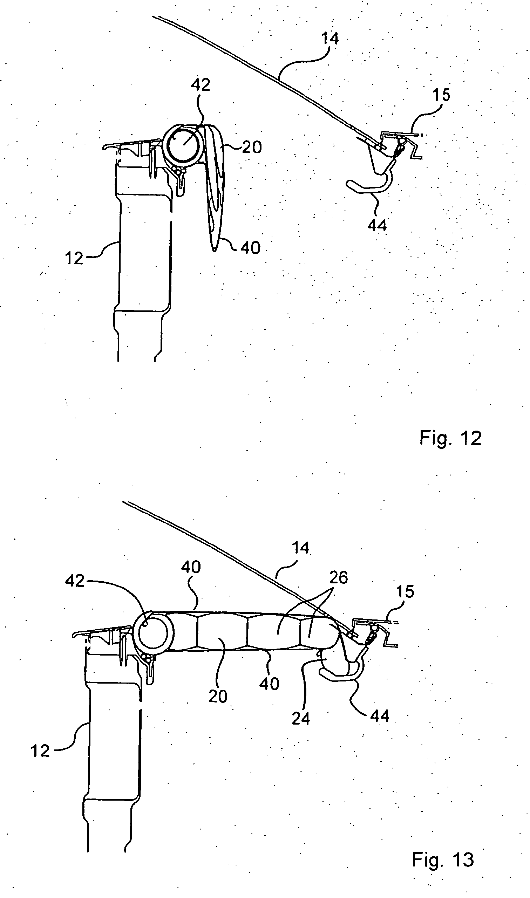

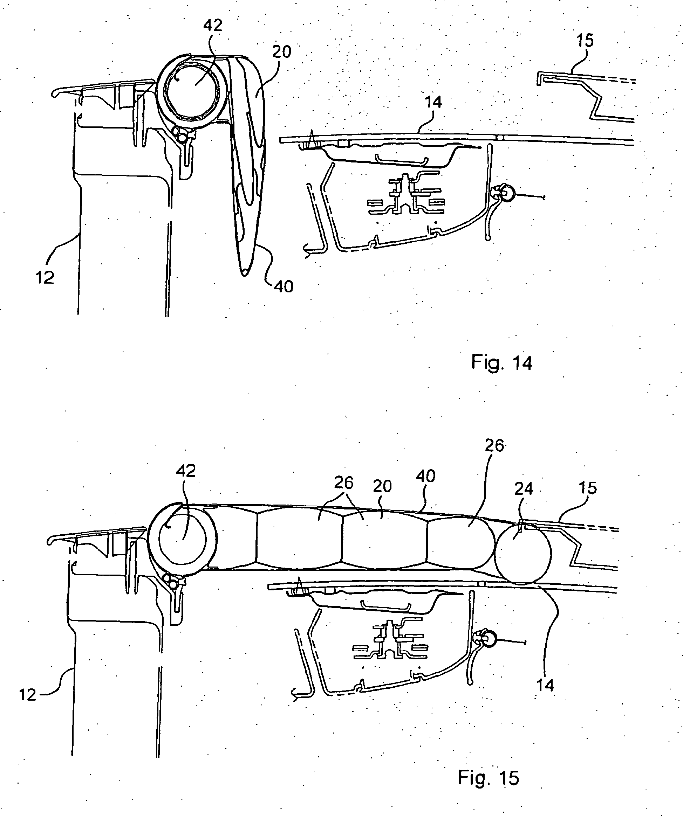

Die Fig. 12, Fig. 13, Fig. 14 und Fig. 15 zeigen eine Ausführungsform der Erfindung, bei der Mittel zum Einfalten des Behälters 20 im erschlafften Zustand vorgesehen sind. Die Darstellung zeigt dabei einen schematisch vereinfachten Längsschnitt durch das Fahrzeug in einem Bereich einer Oberkante der Trennwand 12 (vgl. Fig. 1), wobei in Fig. 12 und Fig. 13 ein Teil des geschlossenen Verdecks 14 sowie eine Vorderkante des Heckkastendeckels 15 sichtbar sind. Die Darstellung in Fig. 14 und Fig. 15 bezieht sich auf eine Situation bei geschlossenem Verdeck 14, das sich zumindest teilweise unterhalb eines ebenfalls wieder geschlossenen Heckkastendeckels 15 erstreckt. In Fig. 12 ist der Behälter 20 im erschlafften Zustand gezeigt. Der erschlaffte Behälter 20 wird von einer einziehbaren Hülle 40 eingefasst. Die Hülle 40 ist einseitig fixiert und auf der anderen Seite auf einer insbesondere unter Federspannung stehenden Walze 42 geführt. Der fixierte Teil der Hülle 40 kann an einer Mechanik zu Halterung der Walze 42 oder auch direkt an der Rückwand 12 fixiert sein. Beim Befüllen des Behälters 20 wird die einziehbare Hülle 40 von der Walze 42 gegen die Federspannung der Walze 42 abgezogen. Beim Evakuieren des Behälters 20 ist die einziehbare Hülle 40 aufgrund der Federspannung der Walze 42 auf die Walze 42 aufwickelbar, so dass mit dem Aufwickeln der Hülle 40 auf die Walze 42 der erschlaffte Behälter 20 zusammengezogen wird. In Fig. 13 ist der Behälter 20 im befüllten Zustand gezeigt. Man erkennt, dass die Hülle 40 den Behälter 20 nach wie vor auf seiner Oberseite und seiner Unterseite umschließt. Die Längenzunahme des von der Walze 42 abgezogenen Teils der Hülle 40 ist gegen die Federspannung der Walze 42 erfolgt.

In dieser Darstellung lässt sich im Übrigen besonders gut auch die Werkung des Abschlussschlauchs 24 als Dichtung bei geschlossenem Verdeck 14 erkennen. Während die Kammern 26 der Hauptkammer 26 dem Behälter 20 im Wesentlichen eine horizontale Ausrichtung verleihen, erstreckt sich der Abschlussschlauch 24 bis in ein als Rinne dargestelltes Formelement 44, das einer Hinterkante des Verdecks 14 zugeordnet ist. Wie bereits beschrieben, wird beim Befüllen des Behälters 20 zunächst die Hauptkammer 26 befüllt, so dass das Befüllen des Abschlussschlauchs 24 erst beginnt, wenn in der Hauptkammer 26 ein Schwelldruck erreicht oder überschritten wird. Erst beim weiteren Befüllen des Behälters 20 beginnt also das Befüllen des Abschlussschlauchs 24. Beim Beginn des Befüllens des Abschlussschlauchs 24 ist damit die Hauptkammer 26 bereits aufgrund des erreichten Schwelldrucks in der gewünschten Art und Weise horizontal ausgerichtet und hat mit ihrer unmittelbar an den Abschlussschlauch 24 angrenzenden Kammer 26 den rückwärtigen Bereich des Verdecks 14 erreicht. Beim Beginn des Befüllens des Abschlussschlauchs 24 befindet sich dieser also bereits im Bereich der Hinterkante des Verdecks 14 und im Bereich des Formelements 44. Beim weiteren Befüllen des Behälters 20 und dem damit bewirkten Befüllen des Abschlussschlauchs 24 schmiegt sich dieser mit zunehmendem Volumen exakt an die Kontur des Formelements 44 an, so dass eine Dichtung gewährleistet ist.

Fig. 14 zeigt den Behälter 20 in erschlafftem Zustand bei abgelegtem Verdeck 14. Aufgrund der auf die Walze 42 eingezogenen Hülle 40 hängt der Behälter 20 exakt in einem zwischen einer Vorderkante des Verdecks 14 und der Trennwand 12 verbleibenden Spalt herab. Fig. 15 zeigt den Behälter 20 in befülltem Zustand bei ebenfalls abgelegtem Verdeck 14. Die Hülle 40 umschließt nach wie vor den Behälter 20. Die bei befülltem Behälter 20 zusätzlich erforderliche Länge der Hülle 40 ist von der Walze 42 abgezogen.

Auch in der Darstellung in Fig. 15 kann man besonders gut die Wirkung des Abschlussschlauchs 24 als Dichtung erkennen. Wieder ist beim Befüllen des Behälters 20 zunächst die Hauptkammer 26 mit den einzeln Kammern 26 befüllt worden. Durch das Befüllen der Hauptkammer 26 wird die Grundform des als variable Hutablage fungierenden Behälters 20 vorgegeben. Insbesondere wird dabei gewährleistet, dass sich der Behälter 20 beim Befüllen oberhalb des abgelegten Verdecks 14 erstreckt. Wenn in der Hauptkammer 26 der Schwelldruck erreicht oder überschritten wird, beginnt das Befüllen des Abschlussschlauchs 24, der zu diesem Zeitpunkt durch das Volumen der Hauptkammer 26 bereits in den Bereich einer Vorderkante des Heckkastendeckels 15 bewegt ist. Beim Befüllen des Abschlussschlauchs 24 schmiegt sich dieser an eine dafür vorgesehene Kontur der Vorderkante des Heckkastendeckels 15 an und fungiert hier als Dichtung.

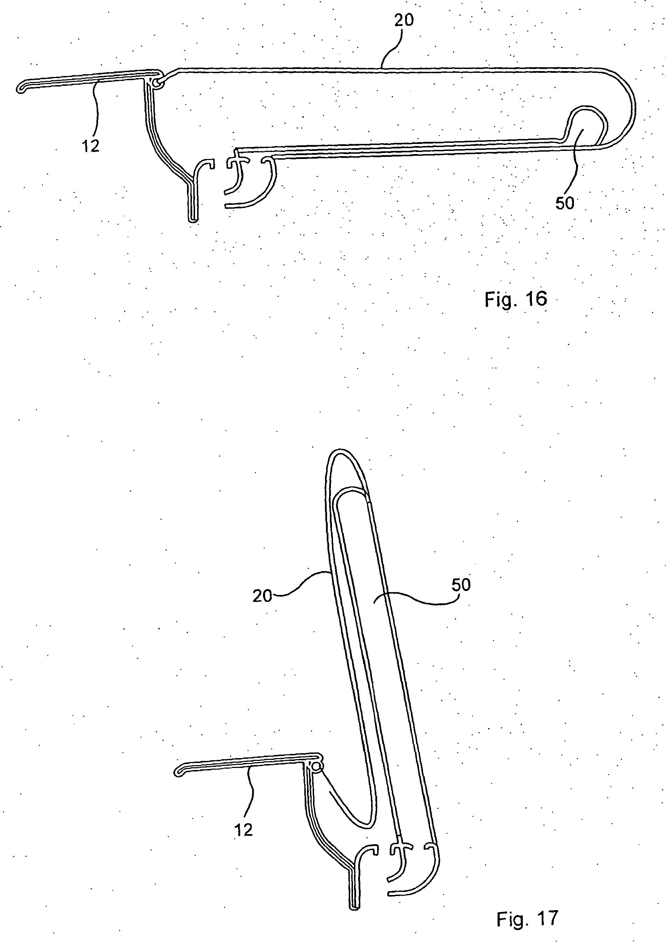

Die Fig. 16 und Fig. 17 zeigen eine alternative Ausführuhgsform der Erfindung, mit der eine vorzugsposition des Behälters 20 auch im erschlafften Zustand erreicht werden kann. Dazu ist vorgesehen, dass der in Fig. 16 und Fig. 17 in einer Schnittdarstellung gezeigte Behälter 20 eine Nebenkammer 50 umfasst. In der gezeigten Ausführungsform in Fig. 16 und Fig. 17 ist die Nebenkammer 50 als im Innern des Behälters 20 angeordnete Nebenkammer 50, also als "innere" Nebenkammer 50, ausgeführt. Bei befülltem Behälter 20, wie in Fig. 16 dargestellt, ist die Nebenkammer 50 evakuiert oder zumindest im Wesentlichen evakuiert. Bei evakuiertem oder zumindest im Wesentlichen evakuiertem Behälter 20, wie in Fig. 17 dargestellt, oder beim Evakuieren des Behälters 20 wird die Nebenkammer 50 befüllt. Durch die Form der Nebenkammer 50 im befüllten Zustand kann dabei der Behälter 20 insgesamt in eine durch die Form der Nebenkammer 50 im gefüllten Zustand vorgegebene Vorzugsposition bewegt werden. Die Vorzugsposition ist dabei insbesondere eine senkrechte oder zumindest im Wesentlichen senkrechte Position, die bevorzugt der Ausrichtung der Trennwand 12 folgt.

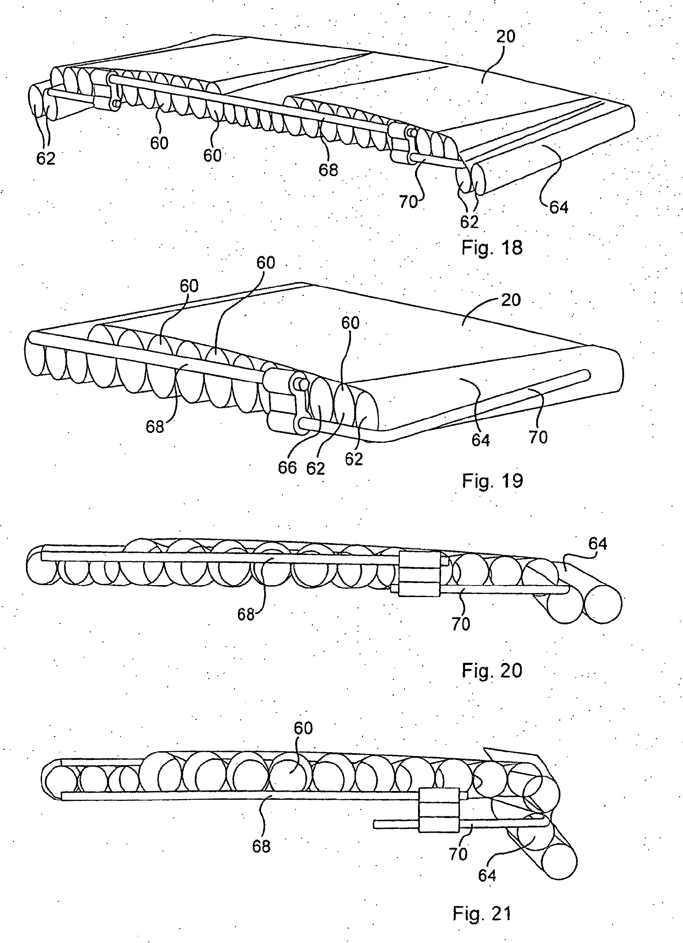

Die Fig. 18, Fig. 19, Fig. 20 und Fig. 21 zeigen schließlich eine weitere Ausführungsform der Erfindung, bei der der als Hutablage fungierende Behälter 20 eine Mehrzahl parallel zu Fahrzeuglängsrichtung ausgerichteter Kammern 60 aufweist. Von den Kammern 60 fungiert jeweils mindestens eine äußere Kammer 62 als Gestängeklappe 64. Mindestens jeweils eine unmittelbar an die Gestängeklappe 64 oder eine der die Gestängeklappe 64 bildenden Kammern 62 angrenzende Kammer 66 fungiert dabei als Scharnier. Die Gesamtheit der insbesondere zwischen den als Scharnier fungierenden Kammern 66 liegenden Kammern 60 fungiert als Hutablage. Die oder jede als Scharnier fungierende Kammer 66 ist unabhängig von den Kammern 60 der Hutablage oder den Kammern 62 der Gestängeklappe 64 befüllbar und/oder evakuierbar. Zum Bewegen, insbesondere zum Verschwenken, der oder jeder Gestängeklappe 64 ist ein zumindest teilweises Evakuieren der oder jeder als Scharnier fungierenden Kammer 66 vorgesehen.

Zum Bewegen der oder jeder Gestängeklappe 64 oder zur Unterstützung einer solchen Bewegung ist eine Mechanik mit einer als Drehachse fungierenden Achse 68 vorgesehen, die für jede Gestängeklappe 64 zumindest einen Steuerhebel 70 umfasst, der entlang der Achse 68 verschieblich gelagert ist. Der Steuerhebel 70 ist dabei L-fömig ausgebildet und erstreckt sich mit seinem freien Ende in eine oder im Randbereich einer der die Gestängeklappe 64 bildenden Kammern 62. Die Fig. 18, Fig. 19, Fig. 20 und Fig. 21 zeigen insgesamt eine schematisch vereinfachte Prinzipdarstellung der Bewegung der Gestängeklappen 64. Zum Bewegen der Gestängeklappen 64 ist zunächst vorgesehen, dass die als Scharnier fungierenden Kammern 66 zumindest teilweise evakuiert werden. Damit ist die ansonsten starre Struktur des befüllten Behälters 20 aufgehoben, so dass eine Beweglichkeit zwischen der durch eine oder mehrerer Kammern 62 gebildeten Gestängeklappe 64 und den restlichen Kammern 60 des Behälters 20 besteht. Für eine definierte Bewegung der Gestängeklappen 64 ist die Mechanik mit der Achse 68 und den verschieblich daran gelagerten Steuerhebeln 70 vorgesehen. In der Darstellung in Fig. 20 ist eine Situation gezeigt, bei der die Bewegung der Gestängeklappen 74 beginnt. In der Darstellung in Fig. 21 ist die Bewegung der Gestängeklappen 64 weiter vorgeschritten, was daran erkennbar ist, dass die Gestängeklappe 64 im Vergleich zur Ebene der restlichen Kammern 60 des Behälters 20 verschwenkt ist. Außerdem ist der Steuerhebel 70 in Richtung der Achse 68 eingezogen. Mit dem Einziehen des Steuerhebels 70 zieht das sich in mindestens eine Kammer 62 der Gestängeklappe 64 erstreckende freie Ende des Steuerhebels 70 die Gestängeklappe 64 insgesamt herunter. Dies entspricht einem definierten Einklappen der Gestängeklappen 64.

Damit lässt sich die Erfindung kurz wie folgt darstellen:
Es wird eine Abdeckanordnung für einen zur Aufnahme eines verstellbaren Fahrzeugverdecks vorgesehenen Verdeckkasten angegeben, die mindestens einen mit einem evakuierbaren Medium befüllbaren elastischen Behälter umfasst.

### BEZUGSZEICHENLISTE

- 10: Fahrzeuginnenraum
- 11: Fondsitzbank
- 12: Rück- oder Trennwand
- 13: Stauraum
- 14: Verdeck
- 15: Heckkastendeckel
- 16: Hutablage
- 20: Behälter
- 21: Nut
- 22: Verdeckspitze
- 24: Abschlussschlauch
- 26: Kammer, Hauptkammer
- 28: Seitenklappe
- 30: Rahmen
- 32: Spriegel
- 34: Führungsschiene
- 40: Hülle
- 42: Walze
- 44: Formelement
- 50: Nebenkammer
- 60: Kammer
- 62: äußere Kammer
- 64: Gestängeklappe
- 66: Kammer
- 68: Achse
- 70: Steuerhebel

## Patentansprüche

1. Variable Hutablage als Abdeckanordnung für einen zur Aufnahme eines verstellbaren Fahrzeugverdecks (14) vorgesehenen Verdeckkasten, welche mindestens einen mit einem evakuierbaren Medium befüllbaren, elastischen Behälter (20) umfasst,
**dadurch gekennzeichnet, dass**
der Behälter (20) beim Ablegen und/oder Schließen des Verdecks (14) evakuiert und bei geschlossenem und/oder abgelegten Verdeck (14) befüllt ist.

2. Abdeckanordnung nach Anspruch 1, wobei
das Medium Luft, insbesondere Druckluft, und der Behälter (20) ein Luftsack ist.

3. Abdeckanordnung nach Anspruch 1 oder 2,
wobei der Behälter (20) in befülltem Zustand eine Nut (21) zur Aufnahme einer Vorderkante des Verdecks (14) ausbildet.

4. Abdeckanordnung nach einem der vorangehenden Ansprüche,
wobei
der Behälter (20) in zumindest zwei Kammern (24, 26) unterteilt ist, wobei eine der Kammern (24, 26) als außen umlaufender Abschlussschlauch (24) ausgeführt ist, der als Dichtung zwischen der Abdeckanordnung und angrenzenden Teilen der Fahrzeugkarosserie fungiert.

5. Abdeckanordnung nach Anspruch 4, wobei
das Volumen des Abschlussschlauchs (24) mit dem Volumen zumindest einer weiteren Kammer (26), insbesondere einer Hauptkammer (26), über zumindest ein Ventil gekoppelt ist, derart, dass bei Erreichen eines Schwelldrucks in der Hauptkammer (26) das
oder jedes Ventil zum Abschlussschlauch (24) öffnet.

6. Abdeckanordnung nach Anspruch 5, wobei
bei einem Druckabfall in der Hauptkammer (26) ausgehend von einem Druck im Bereich des Schwelldrucks das oder jedes Ventil zur Hauptkammer (26) öffnet.

7. Abdeckanordnung nach Anspruch 4, 5 oder 6, wobei
der Behälter jeweils seitlich von der Hauptkammer (26) eine weitere Kammer umfasst, die jeweils als Seitenklappe (28) fungieren.

8. Abdeckanordnung nach Anspruch 4, 5, 6 oder 7, wobei
die Hauptkammer (26) selbst in zumindest zwei, im Wesentlichen parallel zum Abschlussschlauch (24) ausgerichtete Kammern (26) unterteilt ist, wobei beim Befüllen des Behälters die an den Abschlussschlauch (24) angrenzende Kammer der Hauptkammer (26) zuerst befüllt wird.

9. Abdeckanordnung nach einem oder mehreren der vorangehenden Ansprüche, wobei
der Behälter (20) zumindest eine insbesondere innere Nebenkammer (50) umfasst, die bei evakuiertem Behälter (20) befüllbar ist und in befülltem Zustand als Formelement fungiert.

10. Abdeckanordnung nach einem oder mehreren der vorangehenden Ansprüche, wobei
dem Behälter (20) eine einziehbare Hülle (40) zugeordnet ist, die den Behälter (20) zumindest einseitig entlang der Fahrzeuglängsrichtung umschließt.

11. Abdeckanordnung nach Anspruch 10, wobei
die einziehbare Hülle (40) auf einer unter Federspannung stehender Walze (42) geführt ist, wobei die einziehbare Hülle (40) von der Walze (42) beim Befüllen des Behälters (20) gegen die Federspannung von Walze (42) abziehbar ist und wobei die einziehbare Hülle (40) auf die Walze (42) beim Evakuieren des Behälters (20) aufgrund der Federspannung auf die Walze (42) aufwickelbar ist.

12. Abdeckanordnung nach Anspruch 10, wobei
die Walze (42) in einem Mittelbereich einen maximalen Durchmesser aufweist und sich zu jeder Seite verjüngt.

13. Abdeckanordnung nach einem oder mehreren der vorangehenden Ansprüche, wobei
dem Behälter (20) ein längenveränderlicher Rahmen (30) mit zumindest einem quer zur Längsachse des Fahrzeugs ausgerichteten Spriegel (32) zum kontrollierten Zusammenziehen des Behälters während des Evakuierens oder im evakuierten Zustand zugeordnet ist.

14. Abdeckanordnung nach Anspruch 13, wobei
der Rahmen (30) für jede Kammer des Behälters (20) einen Spriegel (32) umfasst und wobei insbesondere jeder Spriegel (32) im Bereich einer Trennwand zwischen jeweils zwei benachbarten Kammern des Behälters (20) mit diesem verbunden ist.

15. Abdeckanordnung nach Anspruch 14, wobei
der Rahmen (30) eine seitliche Führung für den oder jeden Spriegel (32) umfasst, in der jeder Spriegel (32) unabhängig beweglich ist.

16. Abdeckanordnung nach Anspruch 13, 14 oder 15, wobei
der Behälter (20) zusammen mit dem Rahmen an einer Unterseite eines Heckkastendeckels (15) angeordnet ist und wobei der Behälter (20) im evakuierten Zustand durch den Heckkastendeckel (15) abgedeckt ist.

17. Abdeckanordnung nach Anspruch 1, 2 oder 3, wobei
der Behälter in eine Mehrzahl parallel zur Fahrzeuglängsrichtung ausgerichteter Kammern (60) aufgeteilt ist, wobei jeweils mindestens eine äußere Kammer (62) als Gestängeklappe (64) fungiert, wobei jeweils eine unmittelbar an die Gestängeklappe (64) angrenzende Kammer (66) als Scharnier und die Gesamtheit der insbesondere zwischen den Scharnieren liegenden Kammern (60) als Hutablage fungiert.

18. Abdeckanordnung nach Anspruch 17, wobei
das oder jedes Scharnier unabhängig von der Hutablage und der oder jeder Gestängeklappe (64) befüllbar und/oder evakuierbar ist.

19. Abdeckanordnung nach Anspruch 18, wobei
zum Bewegen der oder jeder Gestängeklappe (64) ein zumindest teilweises Evakuieren des oder jedes Scharniers vorgesehen ist.

20. Abdeckanordnung nach Anspruch 19, wobei
zum Bewegen der oder jeder Gestängeklappe (64) eine Mechanik mit einer als Drehachse fungierenden Achse (68) vorgesehen ist, die für jede Gestängeklappe (64) zumindest einen Steuerhebel (70) umfasst, der entlang der Achse (68) verschieblich gelagert ist.

21. Cabriolet-Fahrzeug mit einer Abdeckanordnung nach einem oder mehreren der vorangehenden Ansprüche.

## Claims

1. A variable rear parcel shelf as a cover arrangement for a folding-top compartment provided for receiving an adjustable vehicle folding-top (14), which rear parcel shelf includes at least one elastic container (20) able to be filled with an evacuable medium,
**characterised in that**
the container (20) is evacuated when the folding top (14) is being stored and/or being closed and is filled when the folding top (14) is closed and/or stored.

2. The cover arrangement according to Claim 1, wherein
the medium is air, in particular compressed air, and the container (20) is an air pouch.

3. The cover arrangement according to Claim 1 or 2,
wherein the container (20), in the filled state, forms a groove (21) for receiving a front edge of the folding top (14).

4. The cover arrangement according to one of the preceding claims, wherein
the container (20) is divided into at least two chambers (24, 26), wherein one of the chambers (24, 26) is designed as an outwardly circumferential terminating tube (24) which acts as a seal between the cover arrangement and the adjacent parts of the vehicle body.

5. The cover arrangement according to Claim 4, wherein
the volume of the terminating tube (24) is linked to the volume of at least one further chamber (26), in particular of a main chamber (26), by means of at least one valve, such that, when a threshold pressure is reached in the main chamber (26), the or each valve to the terminating tube (24) opens.

6. The cover arrangement according to Claim 5, wherein
in the event of a fall in pressure in the main chamber (26) starting from a pressure in the region of the threshold pressure, the or each valve to the main chamber (26) opens.

7. The cover arrangement according to claim 4, 5 or 6, wherein
the container, on each side of the main chamber (26), includes a further chamber which in each case acts as a lateral flap (28).

8. The cover arrangement according to Claim 4, 5, 6 or 7, wherein
the main chamber (26) is itself divided into at least two chambers (26) oriented substantially parallel to the terminating tube (24), wherein the chamber, of the main chamber (26), adjacent the terminating tube (24) is filled first when the container is being filled.

9. The cover arrangement according to one or more of the preceding claims, wherein
the container (20) includes at least one in particular inner auxiliary chamber (50) which can be filled when the container (20) is evacuated and which acts as a mould member in the filled state.

10. The cover arrangement according to one or more of the preceding claims, wherein
a retractable sheath (40), which surrounds the container (20) on at least one side along the vehicle longitudinal direction, is assigned to the container (20).

11. The cover arrangement according to Claim 10, wherein
the retractable sheath (40) is guided on a roller (42) which is under spring tension, wherein the retractable sheath (40) can be pulled off of the roller (42) against the spring tension of the roller (42) when the container (20) is filled and wherein the retractable sheath (40) can, as a result of the spring tension on the roller (42), be wound onto the roller (42) when the container (20) is evacuated.

12. The cover arrangement according to Claim 10, wherein
the roller (42) has a maximum diameter in a middle region and tapers to each side.

13. The cover arrangement according to one or more of the preceding claims, wherein
a length-adaptable frame (30) with at least one bracing hoop (32), which is oriented transverse to the longitudinal axis of the vehicle, is assigned to the container (20) for the controlled contraction of the container during evacuation or in the evacuated state.

14. The cover arrangement according to Claim 13, wherein
the frame (30) includes a bracing hoop (32) for each chamber of the container (20) and wherein in particular each bracing hoop (32), in the region of a partition wall between two neighbouring chambers of the container (20), is connected thereto.

15. The cover arrangement according to Claim 14, wherein
the frame (30) includes a lateral guide for the or each bracing hoop (32), in which the or each bracing hoop (32) is independently movable.

16. The cover arrangement according to Claim 13, 14 or 15
wherein
the container (20) is arranged together with the frame at an underside of a rear compartment lid (15) and wherein the container (20) is covered by the rear compartment lid (15) in the evacuated state.

17. The cover arrangement according to Claim 1, 2 or 3, wherein
the container is divided into a plurality of chambers (60) oriented parallel to the vehicle longitudinal direction, wherein at least one outer chamber (62) respectively acts as a linkage flap (64) wherein respectively one chamber (66) directly adjacent to the linkage flap (64) acts as a hinge and all of the chambers (60) situated in particular between the hinges acts as the rear parcel shelf.

18. The cover arrangement according to Claim 17, wherein
the or each hinge can be filled and/or evacuated independently of the rear parcel shelf and the or each linkage flap (64).

19. The cover arrangement according to Claim 18, wherein
an at least partial evacuation of the or each hinge is provided in order to move the or each linkage flap (64).

20. The cover arrangement according to Claim 19, wherein,
in order to move the or each linkage flap (64), a mechanism is provided with an axle which acts as an axle of rotation and which includes for each linkage flap (64) at least one control lever (70) which is displaceably supported along the axle (68).

21. The cabriolet vehicle with a cover arrangement according to one or more of the preceding claims.

## Revendications

1. Plage arrière variable sous forme d'un système de recouvrement pour un logement de capote prévu pour le logement d'une capote d'un véhicule (14) pouvant être déplacée (14), lequel logement comprend au moins un réservoir élastique (20) pouvant être rempli d'un fluide évacuable,
**caractérisé en ce que**,
lors du dépôt et / ou de la fermeture de la capote (14), le réservoir (20) est évacué et rempli lorsque la capote (14) est fermée et / ou déposée (14).

2. Système de recouvrement selon la revendication 1, le fluide étant de l'air, en particulier de l'air comprimé, et le réservoir (20) étant un coussin d'air.

3. Système de recouvrement selon la revendication 1 ou 2, le réservoir (20), lorsqu'il est rempli, formant une encoche (21) pour la réception d'un bord avant de la capote (14).

4. Système de recouvrement selon l'une des revendications précédentes, le réservoir (20) étant divisé en au moins deux chambres (24, 26), l'une des chambres (24, 26) étant également réalisée sous la forme d'un tuyau terminal périphérique extérieur (24) qui fait office de joint d'étanchéité entre le système de recouvrement et des parties attenantes de la carrosserie du véhicule.

5. Système de recouvrement selon la revendication 4, le volume du tuyau terminal (24) étant couplé au volume d'au moins une autre chambre (26), en particulier d'une chambre principale (26), par l'intermédiaire d'au moins une vanne, de sorte que, lorsque la pression de gonflement est atteinte dans la chambre principale (26), la ou chaque vanne s'ouvre vers le tuyau terminal (24).

6. Système de recouvrement selon la revendication 5, la ou chaque vanne s'ouvrant vers la chambre principale (26) en cas de baisse de pression dans la chambre principale (26) à partir d'une pression dans le secteur de la pression de gonflement.

7. Système de recouvrement selon la revendication 4, 5 ou 6, le réservoir comprenant respectivement une autre chambre située latéralement de la chambre principale (26) et faisant respectivement office de hayon latéral (28).

8. Système de recouvrement selon la revendication 4, 5, 6 ou 7, la chambre principale (26) étant elle-même divisée en au moins deux chambres (26) orientées substantiellement parallèlement au tuyau terminal (24), lors du remplissage du réservoir, la chambre, attenante au tuyau terminal (24), de la chambre principale (26) étant remplie en premier.

9. Système de recouvrement selon l'une ou plusieurs des revendications précédentes, le réservoir (20) comprenant au moins une chambre annexe (50) notamment intérieure qui peut être remplie lorsque le réservoir (20) est évacué et qui fait office d'élément formé à l'état rempli.

10. Système de recouvrement selon l'une ou plusieurs des revendications précédentes, une enveloppe (40) escamotable étant affectée au réservoir (20) et entourant le réservoir (20) au moins sur un côté le long du sens longitudinal du véhicule.

11. Système de recouvrement selon la revendication 10, l'enveloppe escamotable (40) étant guidée sur un cylindre (42) sous tension de ressort, l'enveloppe escamotable (40) pouvant être retirée du cylindre (42) lors du remplissage du réservoir (20) à l'encontre de la tension de ressort du cylindre (42) et l'enveloppe escamotable(40) pouvant être enroulée sur le cylindre (42) lors de l'évacuation du réservoir (20) en raison de la tension de ressort sur le cylindre (42).

12. Système de recouvrement selon la revendication 10, le cylindre (42) présentant un diamètre maximal dans une zone centrale et se réduisant de chaque côté.

13. Système de recouvrement selon l'une ou plusieurs des revendications précédentes, un cadre (30) modifiable en longueur avec au moins un arceau (32) orienté transversalement par rapport à l'axe longitudinal du véhicule automobile étant affecté au réservoir (20) pour une rétraction contrôlée du réservoir pendant l'évacuation ou lorsque ce dernier a été évacué.

14. Système de recouvrement selon la revendication 13, le cadre (30) comprenant pour chaque chambre du réservoir (20) un arceau (32) et chaque arceau (32) étant notamment raccordé à ce dernier dans le secteur d'une paroi de séparation entre respectivement deux chambres attenantes du réservoir (20).

15. Système de recouvrement selon la revendication 14, le cadre (30) comprenant un guidage latéral pour l'arceau ou chaque arceau (32) dans lequel chaque arceau (32) est mobile de manière indépendante.

16. Système de recouvrement selon la revendication 13, 14 ou 15, le réservoir (20) étant disposé conjointement avec le cadre sur un côté inférieur d'un couvercle de hayon arrière (15) et le réservoir (20) étant recouvert, lorsqu'il est évacué, par le couvercle de hayon arrière (15).

17. Système de recouvrement selon la revendication 1, 2 ou 3, le réservoir étant divisé en plusieurs chambres (60) orientées parallèlement au sens longitudinal du véhicule automobile, respectivement au moins une chambre extérieure (62) faisant office de couvercle de tringlerie (64), une chambre (66) directement attenante au couvercle de tringlerie (64) faisant respectivement office de charnière et la totalité des chambres (60) situées notamment entre les charnières faisant office de plage arrière.

18. Système de recouvrement selon la revendication 17, la ou chaque charnière pouvant être remplie et / ou évacuée indépendamment de la plage arrière et du ou de chaque couvercle de tringlerie (64).

19. Système de recouvrement selon la revendication 18, une évacuation au moins partielle de la ou de chaque charnière étant prévue pour le mouvement du ou de chaque couvercle de tringlerie (64).

20. Système de recouvrement selon la revendication 19, une mécanique étant prévue pour le mouvement du ou de chaque couvercle de tringlerie (64) avec un axe (68) faisant office d'axe de rotation, laquelle comprend pour chaque couvercle de tringlerie (64) au moins un levier de commande (70) qui est placé le long de l'axe (68) en étant mobile.

21. Véhicule cabriolet avec un système de recouvrement selon l'une ou plusieurs des revendications précédentes.
